# EUROPEAN PATENT APPLICATION

(11) **EP 4 197 397 A1**
(43) Date of publication of application: **21.06.2023**
(21) Application number: 21857446.5
(22) Date of filing: 21.07.2021
(51) Int. Cl.: A47C 17/86

(54) **CONNECTION MEMBER, CONNECTION ASSEMBLY, AND SOFA**

(30) Priority: 17.08.2020 CN 202021717179 U
(71) Applicant: Zinus Inc., Seongnam-si, Gyeonggi-do 13497 (KR)
(72) Inventor: LEE, Younjae, Seongnam-si, Gyeonggi-do 13497 (KR); BAE, Munhan, Seongnam-si, Gyeonggi-do 13497 (KR); KIM, Keunyoung, Seongnam-si, Gyeonggi-do 13497 (KR)
(74) Representative: 2K Patentanwälte Blasberg Kewitz & Reichel
(86) International application number: PCT/CN2021/107505
(87) International publication number: WO 2022/037351

(57) **Abstract**

The present disclosure provides a connector, comprising an installation surface, a first reclined surface and a second reclined surface respectively located on two sides of the installation surface, and a connection surface opposite to the installation surface; the first reclined surface and the second reclined surface extend from the installation surface to the connection surface, and the distance between the first reclined surface and the second reclined surface gradually increases from the installation surface to the connection surface. The present invention also discloses a connection assembly and a sofa. The present invention makes the connection convenient, the assembly simple, and the production cost low.

## Description

### TECHNICAL FIELD

The present disclosure relates to the technical field of household equipment, in particular to a connecting piece, a connecting assembly and a sofa.

### BACKGROUND

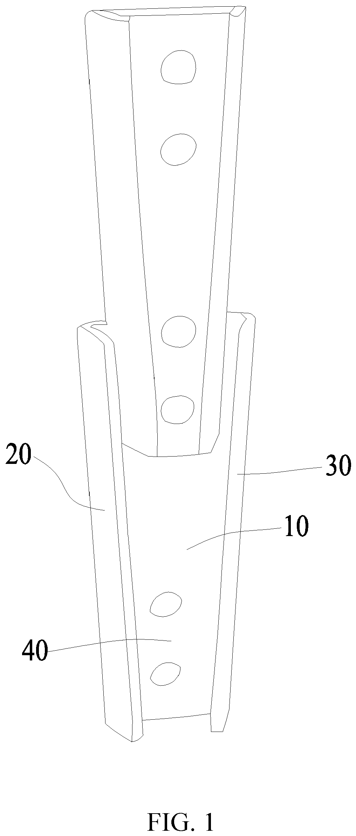

In the prior art, the connecting between sofa components, such as between sofa armrests and sofa frames or connecting between two sofa frames, usually adopt a slot structure with large top and small bottom for plug-in connection, wherein one slot structure is inserted into another slot structure. As shown in Figure 1, the slot structure is composed of a connecting plate 10 and a first side plate 20 and a second side plate 30 arranged on either sides of the connecting plate 10. The distance between the first side plate 20 and the second side plate 30 is gradually reduced from one side to the other side (from top to bottom). The ends of the first side plate 20 and the second side plate 30 are bent inward to form limit parts 40 respectively. The connecting plate 10, the first side plate 20 and the second side plate 30 and their limit parts 40 form an insertion space, and another slot structure can be inserted into the insertion space.

The disadvantage of adopting slot structure for connection mentioned above is that it requires high machining accuracy. If the machining error of the two slot structures is large, it is not easy to align and is difficult to assembly. Moreover, the structure and shape of the two slots structures are different, which requires two molds, such that the production cost is high.

### SUMMARY

The present disclosure aims to solve, at least to some extent, one of the technical problems in the above technology. Therefore, one of the purposes of the present disclosure is to provide a connecting piece, and the connecting pieces can be used in combination to realize convenient connection, simple assembly and low production cost.

The second purpose of the present disclosure is to provide a connecting assembly, which makes the connection convenient, the assembly simple and the production cost low.

The third purpose of the present disclosure is to provide a sofa. The sofa components are connected by connecting assemblies, which makes the connection convenient, the assembly simple and the production cost low.

In order to achieve the above object, the first embodiment of the present disclosure provides a connecting piece comprising an installation surface, a first reclined surface, a second reclined surface, wherein the first reclined surface and the second reclined surface are located on opposite sides of the installation surface, respectively; and a connection surface opposite to the installation surface; wherein the first and second reclined surfaces extend from the installation surface to the connection surface such that a distance between the first and second reclined surfaces increases gradually along a direction from the installation surface to the connection surface.

According to the connecting piece in the embodiment of the present disclosure, when the connecting piece is used, the two connecting pieces are fixed on the support member (such as the sofa component) side by side. Wherein a slot is formed between the second reclined surface of one connecting piece and the first reclined surface of the other connecting piece. The width of the slot increases gradually from the connection surface to the installation surface, that is, the width of the slot is narrow outside and wide inside. The width of the slot approximately matches the width of the third connecting piece fixed on the other support member, the width of the third connecting piece decreases gradually from the connection surface to the installation surface, that is, it is wide outside and narrow inside, and the third connecting piece is just inserted into the slot to form a connection. Therefore, through the combination of connecting pieces, the connection is convenient, the assembly is simple, and only one mold corresponding to the connecting piece is needed, so that the production cost is low.

In addition, according to the above embodiment of the present disclosure, a connecting piece may also have the following additional technical characteristics:

Further, the first and second reclined surfaces are in axial symmetry with each other.

Further, it also comprises a first curved surface and a second curved surface; the first curved surface is respectively connected with one side of the first reclined surface, the second reclined surface, the installation surface and the connection surface, and the second curved surface is respectively connected with the other side of the first reclined surface, the second reclined surface, the installation surface and the connection surface.

Further, the connecting piece is in a long strip shape.

Further, the installation surface is provided with an installation hole.

To achieve the mention above object, the second embodiment of the present disclosure provides a connecting assembly, comprising at least three of the connecting pieces mention above; the first connecting piece and the second connecting piece are fixed on the support member side by side, and the installation surface of the first connecting piece and the installation surface of the second connecting piece abut on the support member. A slot is formed between the second reclined surface of the first connecting piece and the first reclined surface of the second connecting piece. The third connecting piece is fixed on the other support member, the installation surface of the third connecting piece abut on the other support member, and the connection is formed when the third connecting piece is inserted into the slot.

According to the connecting assembly in the embodiment of the present disclosure, a slot is formed between the second reclined surface of the first connecting piece and the first reclined surface of the second connecting piece. The width of the slot gradually increases from the connection surface to the installation surface, that is, the width of the slot is narrow outside and wide inside. The width of the slot is approximately matched with the width of the third connecting piece fixed on the other support member. The width of the third connecting piece gradually decreases from the connection surface to the installation surface, that is, it is wide outside and narrow inside, the third connecting piece is just inserted into the slot to form a connection. Therefore, it makes the connection convenient, the assembly simple, and only one mold corresponding to the connecting piece is needed, so that the production cost is low.

In order to achieve the above object, the third embodiment of the present disclosure provides a sofa, comprising the connecting assemblies, and the sofa components are connected through the connecting assemblies.

According to the embodiment of the present disclosure, a sofa includes a connecting assembly, and a slot is formed between the second reclined surface of the first connecting piece and the first reclined surface of the second connecting piece. The width of the slot gradually increases from the connection surface to the installation surface, that is, the width of the slot is narrow outside and wide inside. The width of the slot is approximately matched with the width of the third connecting piece which is fixed on the other support member, and the width of the third connecting piece gradually decreases from the connection surface to the installation surface, that is, it is wide outside and narrow inside, the third connecting piece is just inserted into the slot to form a connection. Therefore, it makes the connection conveniently, the assembly simply, and only one mold corresponding to the connecting piece is needed, so that the production cost is low.

In addition, according to the above embodiment of the present disclosure, a sofa may also have the following additional technical characteristics:

Further, the sofa components comprise a frame and an armrest, wherein the frame and the armrest are configured to be connected by the connecting.

Further, the sofa components comprise a frame and a backrest, wherein the frame and the backrest are configured to be connected by the connecting assembly.

Further, the sofa components comprise a plurality of frames, wherein the plurality of frames are configured to be connected the connecting assembly.

### BRIEF DESCRIPTION OF THE DRAWINGS

FIG. 1 schematically illustrates a prior art slot structure;
FIG. 2 schematically illustrates a perspective view of a connecting piece of the present disclosure;
FIG. 3 schematically illustrates a perspective view of a connecting piece of the present disclosure from an angle that is different than the angle in Fig. 2;
FIG. 4 schematically illustrates a perspective view of a connecting assembly of the present disclosure;
FIG. 5a schematically illustrates the structural diagram when the armrest installed on the frame according to the embodiment of the present disclosure;
FIG. 5b schematically illustrates the structural diagram after the armrest installed on the frame according to the embodiment of the present disclosure;
FIG. 6a schematically illustrates the structural diagram when the backrest installed on the frame according to the embodiment of the present disclosure;
FIG. 6b schematically illustrates the structural diagram after the backrest installed on the frame according to the embodiment of the present disclosure;
FIG. 7a schematically illustrates the structural diagram when the frame is installed on the frame according to the embodiment of the present disclosure;
FIG. 7b schematically illustrates the structural diagram after the frame installed on the frame according to the embodiment of the present disclosure.

**Description of the labels in drawings**

| | |
|---|---|
| connecting plate 10 | first side plate 20 |
| second side plate 30 | limit part 40 |
| connecting piece 1 | first connecting piece 1a |
| second connecting piece 1b | third connecting piece 1c |
| installation surface 11 | installation hole 111 |
| first reclined surface 12 | slot 121 |
| second reclined surface 13 | connection surface 14 |
| first curved surface 15 | second curved surface 16 |
| connecting assembly 2 | sofa 3 |
| frame 31 | armrest 32 |
| backrest 33 | seat cushion 34 |
| back cushion 35 | |

### DETAILED DESCRIPTION

The embodiments of the invention have been shown and described in detail below. The examples of the embodiments are shown in the drawings, wherein the same or similar number represent the same or similar elements or elements with the same or similar functions from beginning to end. The following embodiments described by referring to the drawings are illustrative and are intended to explain the present disclosure, but cannot be understood as restrictions on the present disclosure.

### Embodiment 1

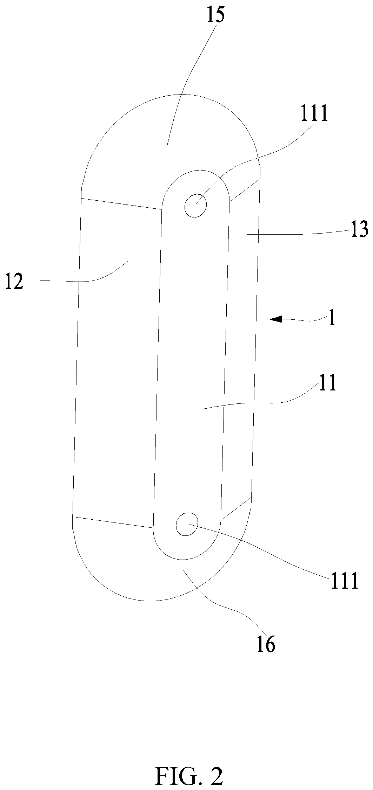

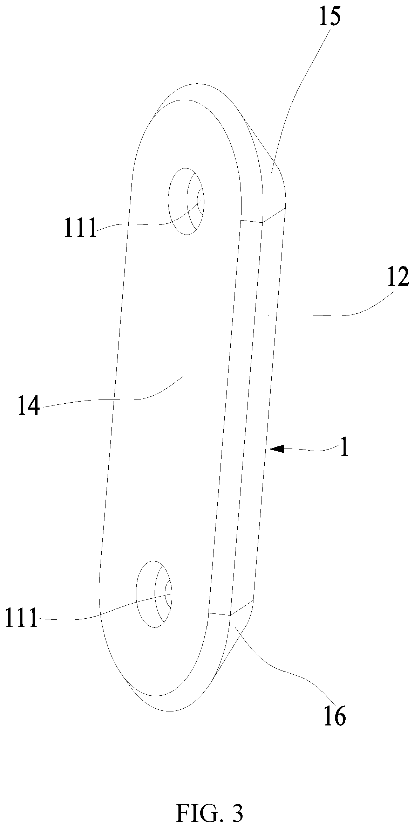

As shown in FIG. 2 to FIG. 4, the connecting piece 1 disclosed by the present disclosure includes an installation surface 11, a first reclined surface 12 and a second reclined surface 13 located on opposite sides of the installation surface 11, respectively, and a connection surface 14 opposite to the installation surface 11. The first reclined surface 12 and the second reclined surface 13 extend from the installation surface 11 to the connection surface 14, and the distance between the first reclined surface 12 and the second reclined surface 13 gradually increases along the direction from the installation surface 11 to the connection surface 14.

When using the connecting piece 1, fix the two connecting pieces 1 side by side on the support member (such as the sofa component), wherein a slot 121 is formed between the first connecting piece 1a's second reclined surface 13 and the second connecting piece 1b's first reclined surface 12. The width of the slot 121 gradually increasing along the direction from the connection surface 14 to the installation surface 11, that is, the width of the slot 121 is narrow outside and wide inside. The width of the slot 121 approximately matches the width of the third connecting piece 1c, which is fixed on another support member, and the width of the third connecting piece 1c gradually decreases from the connection surface 14 to the installation surface 11, that is, it is wide outside and narrow inside. The third connecting piece 1c is just inserted into the slot 121 to form a connection. Therefore, by using the connecting piece 1 in combination, the connection is easy and simple to assemble, and only one mold is needed for producing the corresponding connecting piece 1, resulting in lower production costs.

Optionally, the first reclined surface 12 and the second reclined surface 13 are in axial symmetry with each other. Thus, during assembly, the first connecting piece 1a's the first reclined surface 12 and the second connecting piece 1b's second reclined surface 13 are in good contact, that is, the contact area is large, so that the connection is firm and reliable.

In order to facilitate the insertion of the third connecting piece 1c into the slot 121 formed between the two connecting pieces 1, the connecting piece 1 may also be provided with a first curved surface 15 and a second curved surface 16. The first curved surface 15 connects with one side of the first reclined surface 12, the second reclined surface 13, the installation surface 11 and the connection surface 14, and the second curved surface 16 connects with the other side of the first reclined surface 12, the second reclined surface 13, the installation surface 11 and the connection surface 14. Thus, when the third connecting piece 1c is inserted into a slot 121 which is formed between the two connecting pieces 1, the second curved surface 16 of the third connecting piece 1c may abuts on the first curved surface 15 of the first connecting piece 1a or the first curved surface 15 of the second connecting piece 1b, making it easy to insert the third connecting piece 1c into the slot 121 between the two connecting pieces 1, and making the installation quick and convenient.

In some embodiments, the connecting piece 1 may be designed as a long strip, however, the connecting piece 1 can also be in other shapes, without limitation. In order to fix the connecting piece 1 on the support member conveniently, the installation hole 111 may be provided on the installation surface 11 of the connecting piece 1, and the connecting piece 1 can be firmly connected to the support member by a screw passing through the installation hole 111.

### Embodiment 2

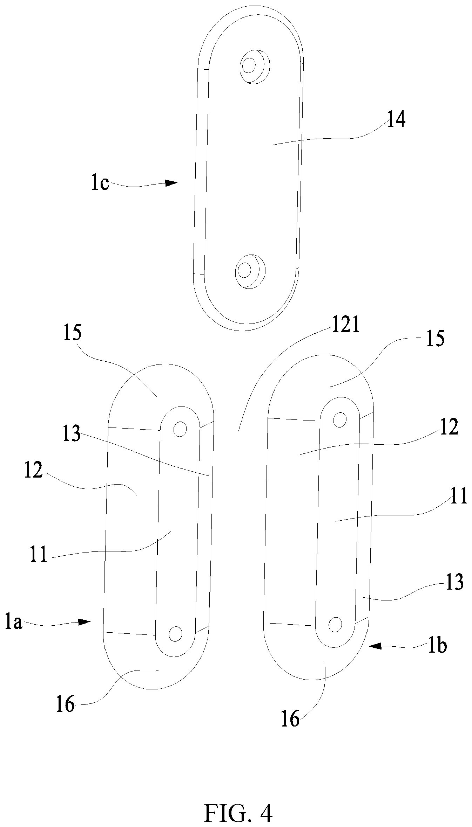

As shown in FIG. 4, the connecting assembly 2 disclosed by the embodiment includes at least three connecting pieces 1 mentioned above of embodiment 1. The first connecting piece 1a and the second connecting piece 1b are fixed on the support member side by side, and the installation surfaces 11 of the first connecting piece 1a and the second connecting piece 1b abut on the support member. A slot 121 is formed between the second reclined surface 13 of the first connecting piece 1a and the first reclined surface 12 of the second connecting piece 1b. The third connecting piece 1c is fixed on another support member, the installation surface 11 of the third connecting piece 1c abut on the other support member, and the connection is formed when the third connecting piece 1c is inserted into the slot 121.

The slot 121 is formed between the second reclined surface 13 of the first connecting piece 1a and the first reclined surface 12 of the second connecting piece 1b. The width of the slot 121 gradually increases from the connection surface 14 to the installation surface 11, that is, the width of the slot 121 is narrow outside and wide inside. The width of the slot 121 is approximately matched with the width of the third connecting piece 1c which is fixed on another support member. The width of the third connecting piece 1c gradually decreases from the connection surface 14 to the installation surface 11, it is wide outside and narrow inside, the third connecting piece 1c is just inserted into the slot 121 to form a connection. Therefore, it makes the connection conveniently, the assembly simply, and only one mold corresponding to the connecting piece is needed, so that the production cost is low.

The embodiment mention above only lists two connecting pieces arranged side by side, and the third connecting piece is inserted into the slot formed which is between the two connecting pieces. Of course, other combination modes can be deduced according to the connecting assembly mode, such as three connecting pieces arranged side by side and forming two slots, and the connecting pieces are inserted in each slot respectively, as well as other more combination modes, which are not discussed here for brevity.

### Embodiment 3

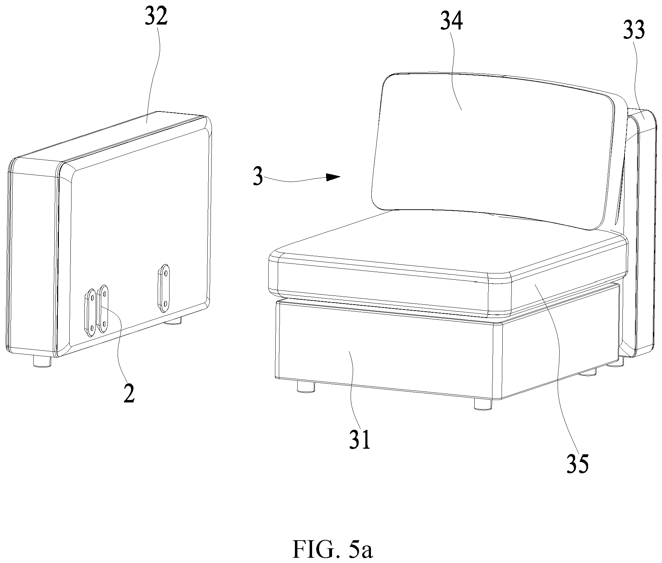

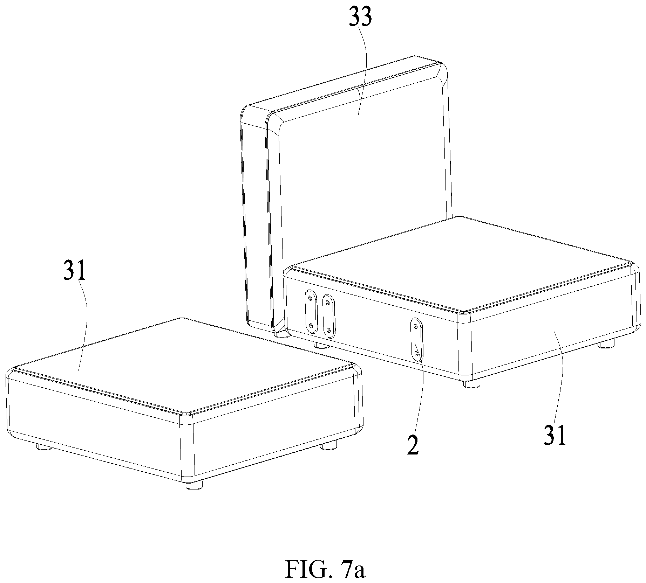

As shown in FIG. 5a to FIG. 7b, a sofa 3 disclosed in this embodiment includes the connecting assembly 2 mentioned above of embodiment 2, which is used to connect the sofa components.

The slot 121 is formed between the second reclined surface 13 of the first connecting piece 1a and the first reclined surface 12 of the second connecting piece 1b. The width of the slot 121 gradually increases from the connection surface 14 to the installation surface 11, that is, the width of the slot 121 is narrow outside and wide inside. The width of the slot 121 approximately matches the width of the third connecting piece 1c which is fixed on another support member. The width of the third connecting piece 1c gradually decreases from the connection surface 14 to the installation surface 11, that is, it is wide outside and narrow inside, the third connecting piece 1c is just inserted into the slot 121 to form a connection. Therefore, it makes the connection conveniently, the assembly simply, and only one mold corresponding to the connecting piece is needed, so that the production cost is low.

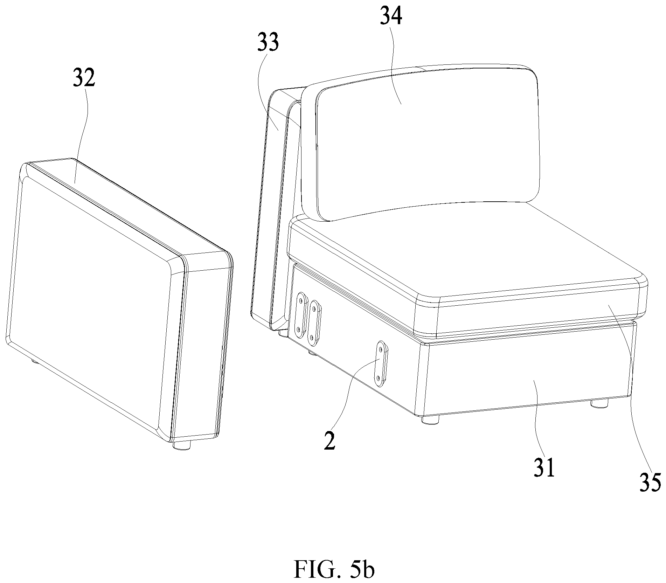

Optionally, as shown in FIG. 5a and FIG. 5b, the sofa components a include frame 31 and an armrest 32. A connecting assembly 2 can be arranged between the frame 31 and the armrest 32 to facilitate the installation of the armrest 32 on the frame 31.

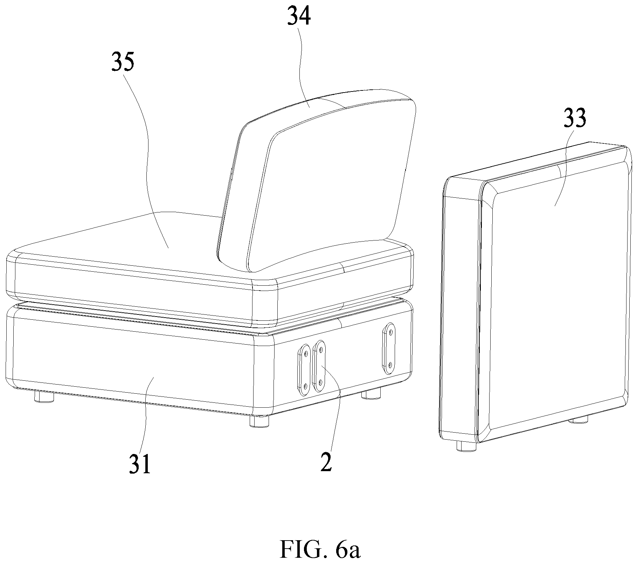

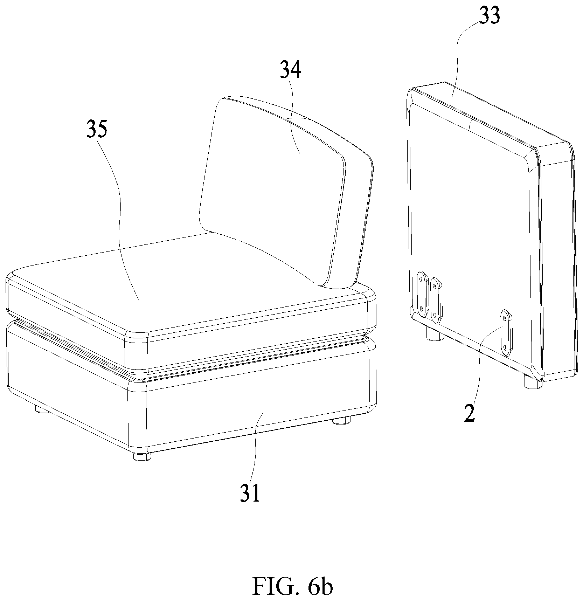

As shown in FIG. 6a and FIG. 6b, the sofa components comprise a frame 31 and a backrest 33, a connecting assembly 2 can be arranged between the frame 31 and the backrest 33 to facilitate the installation of the backrest 33 on the frame 31.

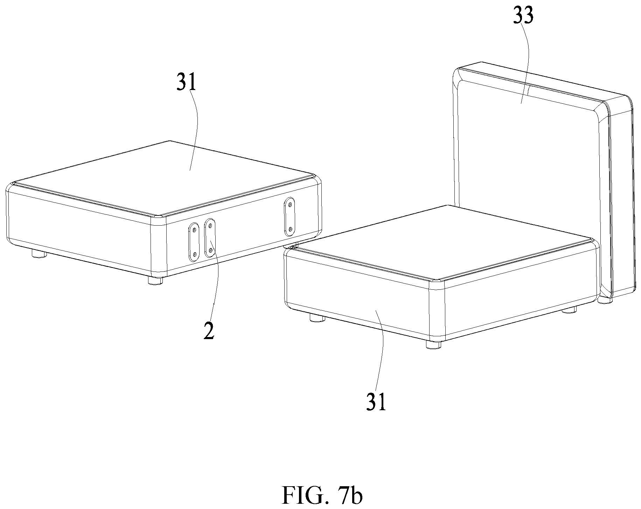

As shown in FIG. 7a and FIG. 7, the sofa components comprise several frames 31, and a connecting assembly 2 is arranged between the frames 31 to facilitate the connection between the frames 31.

Of course, the connecting assembly 2 may also be arranged between the frame 31 and the armrest 32, between the frame 31 and the backrest 33, between the frame 31 and the frame 31 simultaneously. Besides, the seat cushion 34 can be placed on the frame 31 and the back cushion 35 can be placed on the backrest 33, so that people can sit comfortably on the sofa 3.

In the description of the present disclosure, it is necessary to understand that the orientation or position relationship indicated by the terms "center", "longitudinal", "transverse", "length", "width", "thickness", "up", "down", "front", "back", "left", "right", "vertical", "horizontal", "top", "bottom", "inside", "outside", "clockwise" and "anticlockwise" is based on the orientation or position relationship shown in the drawing, which is only for the convenience of describing the present disclosure and simplifying the description, but not for indicating or implying that the device or element referred to must have a specific orientation, be constructed and operated in a specific orientation, so it cannot be understood as a restriction on the present disclosure.

In addition, the terms "first" and "second" are only used for describing objects, and cannot be understood as indicating or implying relative importance or implying the number of technical characteristics indicated. Therefore, the characteristics defined as "first" and "second" can explicitly or implicitly include one or more of these characteristics. In the description of the present disclosure, "a plurality of' means two or more, unless otherwise specified.

In this present disclosure, unless otherwise specified and limited, the terms "installation", "connection", " be connected with", "be fixed with" and other terms should be understood in a broad sense, for example, it may be fixed connection, detachable connection, or integration; it may be mechanical connection or electrical connection; it may be directly connected, or indirectly connected through intermediate media, or it may be the internal connection of two components or the interaction between two components. For ordinary skilled person in the art, the specific meaning of the above terms in the present disclosure can be understood according to the specific situation.

In this present disclosure, unless otherwise specified and defined, the first characteristic in the "up" or "down" of the second characteristic may include the direct contact between the first characteristic and second characteristic, or the contact between the first characteristic and second characteristic is not direct contact but through other characteristics between them. Moreover, the first characteristic is "above", "over" and "on" the second characteristic, including the first characteristic is directly above and diagonally above the second characteristic, or only indicates that the horizontal height of the first characteristic is higher than the second characteristic. The first characteristic "below", "under" and "beneath" of the second characteristic include the first characteristic directly below and diagonally below the second characteristic, or only indicate that the horizontal height of the first characteristic is less than the second characteristic.

In the description of this specification, the description referring to the terms "one embodiment", "some embodiments", "examples", "specific examples", or "some examples" means that the specific characteristics, structures, materials, or features described in combination with the embodiment or example are included in at least one embodiment or example of this present disclosure. In this specification, the schematic expression of the above terms should not be understood as referring to the same embodiments or examples. Furthermore, the specific characteristics, structures, materials or features described may be combined in an appropriate manner in any one or more embodiments or examples. In addition, the technicians in the field can combine different embodiments or examples described in this specification.

Although preferred embodiments of the present invention have been shown and described herein, it can be understood that the embodiments mention above are exemplary and the descriptions of the embodiments herein are not meant to be construed in a limiting sense. Numerous variations, modifications, changes, and substitutions will now occur to those skilled in the art without departing from the invention.

## Claims

1. A connecting piece, comprising:
an installation surface;
a first reclined surface;
a second reclined surface, wherein the first reclined surface and the second reclined surface are located on opposite sides of the installation surface, respectively; and
a connection surface opposite to the installation surface;
wherein the first and second reclined surfaces extend from the installation surface to the connection surface such that a distance between the first and second reclined surfaces increases gradually along a direction from the installation surface to the connection surface.

2. The connecting piece of claim 1, wherein the first and second reclined surfaces are in axial symmetry with each other.

3. The connecting piece of claim 1, further comprising a first curved surface and a second curved surface; wherein the first curved surface is respectively connected with one side of the first reclined surface, the second reclined surface, the installation surface and the connection surface, and the second curved surface is respectively connected with the other side of the first reclined surface, the second reclined surface, the installation surface and the connection surface.

4. The connecting piece of claim 1, wherein the connecting piece is in a long strip shape.

5. The connecting piece of claim 1, wherein the installation surface is provided with an installation hole.

6. A connecting assembly, comprising:
at least three connecting pieces according to any one of claims 1 to 5;
wherein a first connecting piece and a second connecting piece are fixed on the support member side by side, and an installation surface of the first connecting piece and an installation surface of the second connecting piece abut on the support member; a slot is formed between the second reclined surface of the first connecting piece and the first reclined surface of the second connecting piece; the third connecting piece is fixed on the other support member, an installation surface of the third connecting piece abut on the other support member, and the connection is formed when the third connecting piece is inserted into the slot.

7. A sofa, comprising a connecting assembly of claim 6, and the sofa components are connected through the connecting assembly.

8. The sofa of claim 7, wherein the sofa components comprise a frame and an armrest, wherein the frame and the armrest are configured to be connected by the connecting assembly.

9. The sofa of claim 7, wherein the sofa components comprise a frame and a backrest,
wherein the frame and the backrest are configured to be connected by the connecting assembly.

10. The sofa of claim 7, wherein the sofa components comprise a plurality of frames, wherein the plurality of frames are configured to be connected the connecting assembly.
